# EUROPEAN PATENT SPECIFICATION

(11) **EP 3 662 424 B1**
(45) Date of publication and mention of the grant of the patent: **22.11.2023**
(21) Application number: 18749860.5
(22) Date of filing: 31.07.2018
(51) Int. Cl.: G06Q 10/08, G06Q 10/06, G06Q 50/26

(54) **SECURITY SYSTEM FOR TRANSIT FACILITY**
SICHERHEITSSYSTEM FÜR TRANSITANLAGE
SYSTÈME DE SÉCURITÉ POUR INSTALLATION DE TRANSIT

(30) Priority: 31.07.2017 GB 201712317; 20.02.2018 EP 18157722
(43) Date of publication of application: 10.06.2020
(73) Proprietor: Smiths Detection-Watford Limited, Hemel Hempstead Hertfordshire HP2 7DE (GB)
(72) Inventor: NORTON, Timothy, Hemel Hempstead Hertfordshire HP2 7DE (GB)
(74) Representative: Leach, Sean Adam
(86) International application number: PCT/GB2018/052185
(87) International publication number: WO 2019/025786

(56) References cited:
- US-A1- 2008 198 967

## Description

### Field of the invention

The present invention relates to a system for assisting in the identification of material of interest in articles in transit through a transit facility.

### Background

Transit facilities such as ports, borders and airports experience very high levels of through flow. For instance, a modern container ship may carry more than many thousands of containers, each of which may be carrying material of interest such as illegal cigarettes, people, narcotics or other types of contraband. In this context, material of interest may comprise: any materials, items, biological materials such as animals, persons, tissues, cell lines, antibodies etc. whether illegal or not. This may include, for example, black market cigarettes, lithium ion batteries, radiological (radioactive) materials or drugs and weapons and explosives. It is desirable to prevent this contraband from passing through the transit facility undetected. Such transit facilities may include ports and borders, but also any facility at which articles need to be inspected, e.g. customs, for example at airports, as well as parcel delivery centres, or any facility at which there may be scanning of cargo or luggage.

Transit facilities typically use detection devices such as X-ray scanners to image the contents of a container and to estimate therefrom whether or not the container contains any contraband. It has been proposed to reduce the number of scans performed by using statistical methods to estimate the likelihood of a container from containing contraband based on attributes associated with the container. For example, containers originating from some countries may always be scanned whereas containers associated with a particular owner may never be scanned.

Transit facilities may comprise many different types of detection device such as portable X-ray scanners, fixed gamma ray scanners, neutron analysis systems, multi-mode passive detection systems etc. These devices may each operate using proprietary, and in some cases, secret, communications protocols, and there may be strict commercial and regulatory constraints on the ability to share data produced by these different devices. Security personnel must therefore read data for each of these devices and make a subjective decision as to what (if any) security action is to be taken. Data from the detection device may be input into a database.

US 2008/198967 A1 discloses a high throughput baggage inspection system.

### Summary of the invention

Aspects and examples of the present disclosure are set out in the claims and aim to address at least these and other technical problems.

In an aspect there is provided a security system to assist in identifying the presence of material of interest in articles in transit through a transit facility. The system comprises: a first detection device for obtaining detection data relating to an article in transit through the transit facility; a data store configured to store an association between each of a plurality of case identifiers and a corresponding plurality of items of case data each describing an article in transit; and a server. The server comprises: a plurality of application programming interfaces, APIs, configured to communicate between software applications of the server, the first detection device, and the data store; a message bus configured to provide a communication path between the plurality of APIs; and a listener coupled to the message bus and configured to obtain, from the message bus, messages sent between the APIs carrying a case identifier, and to modify the stored association based on the case identifier and case data carried by said messages.

An article in transit may correspond to one of the plurality of case identifiers. Case data corresponding to the one case identifier may thus correspond to an article in transit, or a plurality of articles. The association provides access to items of data associated that case identifier. The security system is able to identify items of data which relate to at least one of the plurality of case identifiers stored in the association. In particular, where messages are sent using the message bus, case data carried by the messages may be obtained by the listener, and the association modified based on this case data. This may provide the association with an increased volume of case data which it may otherwise never have been presented with. This increase in case data may assist in identifying the presence of material of interest in articles in transit through a transit facility.

In an embodiment, the server comprises a prediction system configured to determine, based on data stored in the association, a risk indicator for an article in transit. The risk indicator may comprise a continuous variable, such as a percentage for the risk. The risk indicator may comprise a discrete variable, such as an indication of whether further action is required or not. The risk indicator may comprise both such variables. For example, a percentage for the risk above an action threshold may be interpreted as further action being required.

This may enable the system to reduce the number of occurrences of obtaining detection data, which may be both more efficient/economical, and more ecological. This is because articles which are determined to be associated with a low risk may be allowed to pass through the transit facility without the need for any detection data to be gathered.

In an embodiment, the server is configured so that, in the event that the case data carried by the message confirms the presence or absence of material of interest in a first article, the case data in the stored association is updated based on said message. Updating the case data in the stored association may comprise adding an indication of the outcome (presence/absence of material of interest in the first article). It may also comprise adding an indication of a risk indicator determined by the prediction system for the first article. The risk indicator determined on this basis may be stored with the data stored in the association that was used to determine said risk indicator. Or, data may be stored indicating an association between that risk indicator and the stored data that was used to determine it. This provides a record of both the input data (e.g. stored data linked to the first article) and the generated result (e.g. risk indicator for the first article). Methods of the disclosure comprise using these input data and these results to update the prediction system - for example based on a difference between a predicted outcome and the actual detection/non-detection of material of interest.

This may enable the system to gather more data than it would otherwise be able to. This is because software applications running on the server may have access to more or different systems relating to the presence of material of interest in articles in transit. For instance, an application may have access to empirical results for the presence of material of interest in an article. This may enable the system to accurately confirm or refute predictions made by the prediction system.

In an embodiment, the prediction system is configured to determine a risk indicator for a second article based on the updated association. Determining said risk indicator may be based on the outcome for the first article. It may be based on both the determined risk indicator and the outcome for the first article. It may also be based on case data associated with the second article. This may enable the system to adapt to temporal changes in the presence of material of interest in articles in transit.

In an embodiment, the prediction system is configured to change the manner in which it determines the risk indicator in response to case data obtained from said messages. The change may be determined based on the prediction for the first article. It may be determined based on the outcome for the first article. It may be determined based on both. This may enable the prediction system to improve its risk indicator determination over time. It is to be appreciated that by providing the prediction system with more training data it will develop and improve its prediction abilities. The architecture of the security system may enable an increase in the volume of case data available for the prediction system. In particular, the provision of a message bus for communication between the plurality of APIs, and a listener configured to listen to communications sent using the message bus, enables any case data communicated using the message bus to be detected and added to the data store. Without the present architecture, some of these communications may have gone unnoticed and thus this case data would not have been identified. By amassing a greater volume of case data, the prediction system may be presented with a greater volume of training data which can improve said prediction system. This is because case data may comprise an outcome for the presence of material of interest in the article, which enables predictions made by the prediction system to be directly compared with actual outcomes. This may enable the prediction system to be provided with more training data, which aids its development and accuracy. A plurality of such listeners may be provided.

Changing the manner of risk indicator determination may comprise updating a model for determining risk used by the prediction system. This may comprise updating weightings or any other parameters of that model, such as numerical parameters or coefficients for the model. It may comprise updating the functionality of the model itself. The update may comprise providing the model with an indication of an actual outcome. The prediction system may therefore adapt the model so that predictions for known input data are in closer conformity with the known outcomes associated with that input data. The prediction system may therefore be trained to provide an improved mapping of input data to predicted outcomes based on previous experience.

Determining the risk indicator may comprise using at least one of: (i) a regression analysis based model, (ii) a tree-based model, and (iii) an artificial neural network, ANN, based model. Updating the functionality of the model may comprise updating at least one algorithm used by the model. It may comprise adding a new algorithm or function to the model. Changing the manner of risk indicator determination may comprise a form of supervised learning. The supervised learning may be based on training data comprising the determined risk indicator for the first article (input) and the indication of the outcome for the first article (desired output). It may be based on multiple inputs and outputs from the association. The manner of risk indicator determination may be changed to reduce the difference between a predicted output and a desired output.

The provision of a prediction system capable of machine learning and an increase in the availability of training data available to train the prediction system enables improved predictions. Improvements in determining a risk indicator for an article in transit may enable increased efficiency at transit facilities. For example, this may be by reducing the number of false positives (where an article is predicted to contain material of interest, but it does not), and false negatives (where an article is predicted not to contain material of interest but it does).

In an embodiment the server is configured to determine whether to trigger a security action for an article based on said risk indicator. Triggering a security action may result in further action being taken on the article in transit. This may help identify and detect articles which do contain material of interest. By determining the risk indicator as above, and using the risk indicator to determine whether or not to trigger a security action, the system may provide a more streamlined and efficient approach for identifying the presence of material of interest in articles in transit. A security action may only be triggered in response to the risk indicator being above a risk threshold. By providing an improved prediction system for risk indicators, fewer security actions may be triggered.

In an embodiment the security action comprises at least one of: operating the first detection device to obtain further case data describing the article; operating a second detection device to obtain further case data describing the article; and controlling transit of the article through the facility based on the risk indicator. The security action chosen may depend on the determined risk indicator. A risk indicator indicating a high risk for the article may result in a more thorough and invasive security action being triggered. A lower indication of risk may not result in such a time-consuming check. This may improve efficiency as security actions may be chosen which reflect the level of risk, and so the more time, energy and money consuming security actions may be used on fewer occasions.

In an embodiment the server is configured to accumulate, in the case data associated with each case identifier, a plurality of items of data describing each article in transit and to determine a risk indicator for each article based on the accumulated case data. This may enable the case data in the association to develop over time. More trends and/or patterns may thus be observed, which are both general and specific to individual articles. The increase in accumulated data relevant to each article in transit may provide the prediction system with an increased quantity of training data. This may improve the prediction system as a consequence of supervised learning using this data.

In an embodiment operation of the listener is transparent to the APIs. This enables functionality of the system to remain consistent for an operator of the system, as the functionality of the system as a whole will not require changes to accommodate the listener. For instance, the operator may still utilise a software application with which they are familiar, and the functionality of this software application will appear the same to the operator. However, the architecture of the security system, notably the listener being transparent to the APIs, enables case data to still be collected without there being any noticeable change to the functionality of the software, such that the software application is unaware that such data is being collected.

In an embodiment data obtained from the first detection device comprises image data from a scan of the article, and optionally metadata for the image data. The scan may be from a portable or non-portable device. It may be from an X-ray scanner, it may be from a gamma ray scanner. Metadata may enable any analysis of the image data (e.g. by software of the first detection device) to be carried in the same message as the image data.

In an embodiment a first of the software applications is configured to provide a human user interface associated with the transit of articles through the facility, and the APIs are configured to communicate between the first software application and the data store via the message bus. Typically, communication between the message bus and the data store is indirect and comprises the use of a data store API, although in some embodiments, the message bus may communicate directly with the data store. The human user interface may provide a user with access to view data on the system and to input data into the system. Any data being sent to or from the software application may be sent on the message bus and so the listener may obtain case data from these messages. The user may then input any results or data resulting from a further inspection of the article into the system using the human user interface. This may provide the server with more data relating to outcomes for the presence of material of interest in articles. This in turn may provide for training data from which the prediction system may learn.

In an embodiment the system comprises a second software application configured to provide security data from a second detection device to the data store using the APIs. The second software application may be configured to analyse data from the second detection device. The provision of a second detection device may also allow for the provision of a cross correlation between the data from the first detection device and the data from the second detection device.

In an embodiment the listener comprises at least one API coupled to the message bus and configured to subscribe to all messages comprising a case identifier. The at least one API may therefore determine, for each message if there are any identifiers associated with the message, and if so, if one is a case identifier. This may reduce volume of non-useful data being stored in the association, as data may only be stored in the association if it is known to be associated with a case identifier.

In one example there is provided a server for assisting in identifying the presence of material of interest in articles in transit through a transit facility. The server comprises: a plurality of application programming interfaces, APIs, configured to communicate between software applications of the server, a first detection device, and a data store; a message bus configured to provide a communication path between the plurality of APIs; and a listener coupled to the message bus and configured to obtain, from the message bus, messages sent between the APIs carrying a case identifier, and to modify the stored association based on the case identifier and case data carried by said messages. The server may be connectable to the first detection device and the data store at a transit facility.

In one example there is provided a method for assisting in identifying the presence of material of interest in articles in transit through a transit facility. The method comprises: determining, based on: (i) a prediction model and (ii) data stored in an association between each of a plurality of case identifiers and a corresponding plurality of items of case data, a risk indicator for an article in transit; obtaining, from a message bus, messages carrying a case identifier sent between a plurality of APIs; and in the event that the case data in a message confirms the presence and or absence of material of interest in an article in transit, updating the prediction model based on said case data.

In one example, there is provided a computer program product comprising program instructions configured to program a processor to perform a method of the present disclosure. For example, the above-described method.

### Figures

Embodiments of the disclosure will now be described, by way of example only, with reference to the accompanying drawings in which:
Fig.1 shows a security system to assist in identifying the presence of material of interest in articles in transit through a transit facility.
Fig. 2 shows a security system to assist in identifying the presence of material of interest in articles in transit through a transit facility.

### Specific description

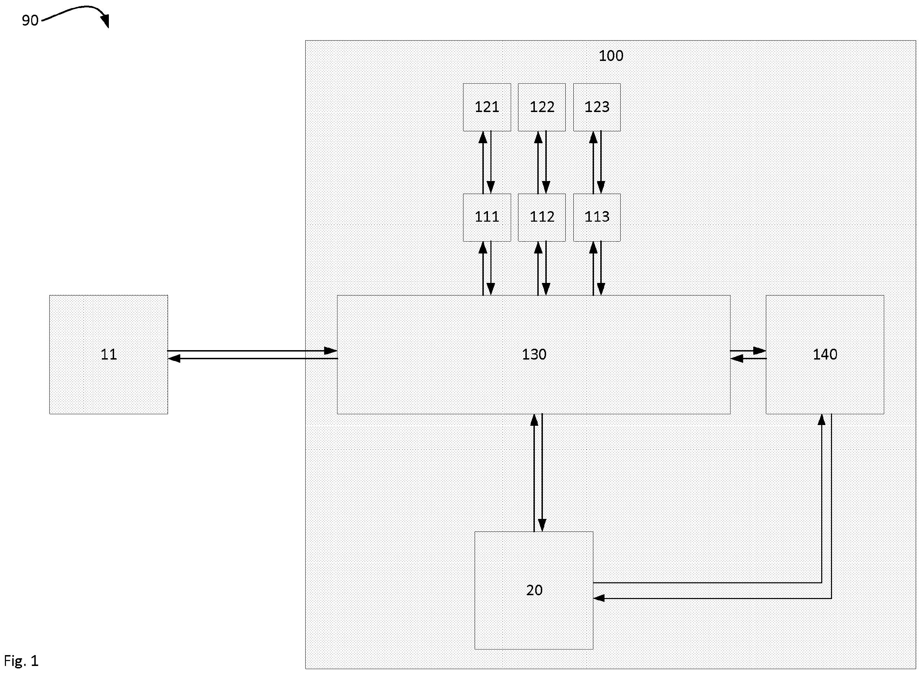

Fig. 1 shows a security system 90 to assist in identifying the presence of material of interest in articles in transit through a transit facility.

The system 90 is arranged to provide a platform on which software applications may operate, and to provide these applications with access to a data store 20 and a first detection device 11. The system 90 provides a message bus 130 and a plurality of Application Programming Interfaces (`APIs') for enabling communication between the applications, the detection device 11 and the data store 20. The system 90 also includes a listener 140 which observes communications sent using the message bus 130, so that in the event that a communication is sent which includes relevant data, the system 90 updates the data store 20 based on this relevant data. This enables the system 90 to accumulate an increased quantity of data. This increased quantity of data may be used when determining the risk that an article contains material of interest. For example, this data may be used as training data for training a machine learning based prediction system. An advantage of this security system is that the presence of material of interest in an article in transit may be determined based on data relating to the first article, which is not necessarily data obtained from a detection device.

Fig. 1 shows one such security system 90 for a transit facility. The security system 90 comprises a first detection device 11, a data store 20 and a server 100. The server 100 comprises a plurality of APIs (first API 111, second API 112 and third API 113), a message bus 130, a listener 140 and a plurality of software applications running on the server 100 (first software application 121, second software application 122 and third software application 123). The data store 20 stores an association between each of a plurality of case identifiers and a corresponding plurality of items of case data each describing an article in transit. This may be stored on a volatile and/or non-volatile memory of the data store 20. Each of the first detection device 11 and the data store 20 are coupled to the server 100.

Each of the plurality of software applications of the server 100 are coupled to at least one of the plurality of APIs so that they may use the APIs for communication. Each of the plurality of software applications may call one or more of the APIs to provide communication between the software and one or more parts of the rest of the system 90. Each of the APIs is coupled to the message bus 130, as is the listener 140, the first detection device 11 and the data store 20. The message bus 130 is configured to provide a communication path between each of these components of the system 90.

The message bus 130 provides a communication path for messages sent by detection devices connected to it. Detection devices may connect to the message bus 130 and send messages on it. Detection devices may also listen to messages sent on the message bus 130 and obtain messages from the bus 130. For instance, there may be a plurality of components (e.g. APIs, detection devices, listeners) connected to the message bus 130, which are configured to detect that a message of a certain type has been sent on the message bus 130. In the event that that type of message has been sent, the relevant component will obtain the message. Accordingly, many different components of the security system may be configured to communicate via the message bus 130, for example, using one or more of the APIs. The message bus 130 also enables such components to receive messages by obtaining messages associated with a desired type which are sent on the message bus 130.

In operation, a software application of the system 90 calls an API for communication. The communication may be with one or more parts of the system 90 (e.g. hardware or software). In one example, the communication is between the software application and the data store 20. The API enables communication between the software application and the data store 20 by using the message bus 130 to provide a communication path between the API and the data store 20. An example communication scenario between a software application and the data store 20 is described herein.

A message is sent, on the message bus 130, from the API to the data store 20. For example, this message may comprise a request for data retrieval of an item from the data store 20. In response, a message is sent, on the message bus 130, to the API. For example, this message may be sent by a data store API (not illustrated) operating between the message bus and the data store, and the message may comprise the requested data item. The API then relays this communication to the software application. For example, this may comprise forwarding the message to the software application, or forwarding an indication of the requested data item. The messages sent on the message bus 130 between the API and the data store 20 are `listened to' by the listener 140 without interception of that communication e.g. the listener 140 is transparent to the APIs. Multiple listeners may be present which are each configured to listen to the same message, but to perform different actions.

Each message comprises at least one identifier associated with it. An identifier for a message may comprise a case identifier. A case identifier provides an indication of a respective corresponding article in transit through the facility. Each case identifier may identify one respective article. For example, this may be one container/one item of cargo. It may comprise information identifying the source of the article. It is to be appreciated that a case identifier represents an indication of at least one property of an article in transit. It may represent one instance of transit of an article, such that one article is related to a first case identifier when in transit through a first transit facility. The same article (e.g. a container) may then be related to a second case identifier when passing through a second transit facility. In which case, one article may be associated with a plurality of case identifiers. For example, at any one time, each article in transit through a transit facility will be associated with a 'new' case identifier, which corresponds to that particular instance of transit through the transit facility. However, this article may also be associated with a plurality of 'historic' case identifiers, which relate to previous instances of transit through the transit facility for that article. Data relating to these historic case identifiers may be stored in the data store 20 associated with the new case identifier for the article. The data store 20 stores a plurality of items of case data, each of which is indexed corresponding to its case identifier. The case identifiers therefore enable the provision of a system 90 for organising stored items of case data, and enabling items of case data to be associated with their relevant case identifiers.

The listener 140 is configured to subscribe to all messages which include a case identifier available on the message bus 130, and to identify, for each message that is sent, any identifiers associated with the message. For instance, the listener 140 is configured to determine the case identifier associated with a message sent on the message bus 130. If the listener 140 determines that the case identifier associated with the message corresponds to a case identifier stored in the association in the data store 20 then the listener 140 may modify the stored association based on the case identifier and any case data carried by the message. For instance, the listener 140 may add an indication of the case data carried by the message to the association. The case data is added to the association so that it is associated with the case identifier for the message.

The listener 140 is configured to extract case data from the message in a manner so that its function is undetected by the message or any APIs or software applications the message is related to. For instance, the listener 140 may replicate the case data carried by message, and add an indication of the replicated case data to the data store 20. The listener 140 may obtain the messages themselves, or a replica thereof. The indication of the case data or the replicated case data may be the case data itself, or the listener 140 may be configured to process the case data and to add the processed version of the case data to the data store 20. Operation of the listener 140 is therefore said to be `hidden from' or 'transparent to' the APIs and/or the software applications.

Before adding case data to the data store 20, the listener 140 may determine whether the case data from the message is already existent in the association. In the event that the case data from the message is present in the data store 20, the listener 140 does not add an indication of the case data to the data store 20. In some embodiments, the listener 140 may be configured to determine whether case data carried by the message exists in the association before replicating any case data from the message. For instance, in the event that the case data does not exist in the association, the listener 140 will extract the case data from the message, and in the event that the case data does exist in the association, the listener 140 will not extract case data from the message. The listener 140 may determine if a portion of the case data does not exist in the association and only extract the portion of case data which does not exist in the association.

The security system 90 of Fig. 1 is configured to assist in identifying the presence of material of interest in articles in transit through a transit facility. In operation, the server 100 may receive article data. The article data may comprise a manifest including relevant information for the article, such as its owner and where it has come from. The server 100 is configured to store this article data in the association as case data associated with the relevant case identifier for the article.

The stored case data indicative of the article data may be used by APIs and software applications of the server 100 for determining a risk indicator for the article. It is preferable to have as much data as possible when determining a risk indicator. In particular, any previous outcomes for the presence of material of interest in articles in transit may aid in more accurately determining the risk indicator.

The software applications may receive external input, such as from a user who inputs the outcome from a physical inspection of an article in transit. The external input may be from another software application which has performed a risk analysis using data in the association to generate a certain risk indicator. The detection device 11 may obtain detection data relating to an article in transit through the transit facility. This detection data may comprise a scan of the article, and may provide a further indication of the presence of material of interest in the article in transit.

These sources of input data may not be accessible to the server 100 in a manner in which they could be added to the association. However, they could provide more case data for the association, which would be preferable in light of the benefits of having a greater store of data in the association. Indications of this data may be included in messages sent through the security system 90 (e.g. from the first detection device 11 to an API to be used by a software application). These messages are sent using the message bus 130, and so are detected by the listener 140. The listener 140 may then modify the association based on such messages. This enables the security system 90 to increase the data stored in the association, which may assist in identifying the presence of material of interest in articles in transit through the transit facility.

With continued use, the system 90 may therefore accumulate, in the case data associated with each case identifier, a plurality of items of data describing, for example, each article in transit. This accumulated data may assist in identifying the presence of material of interest in articles in transit through the transit facility.

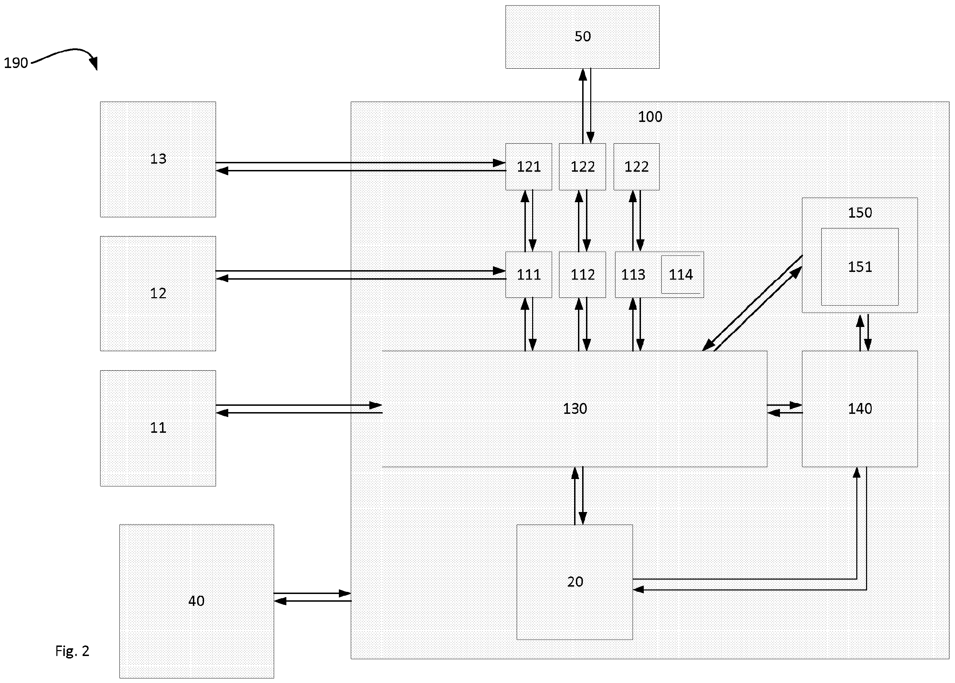

Another example security system will now be described with reference to Fig. 2. Where appropriate, the same reference numerals have been used as those used for features illustrated in Fig. 1.

Fig. 2 shows a security system 190 to assist in identifying the presence of material of interest in articles in transit through a transit facility.

The system 190 of Fig. 2 is arranged to provide a platform on which software applications may operate, in a manner analogous to that described above in relation to Fig. 1. The system 190 also includes a prediction system 150 for predicting risk associated with an article in transit. Predictions may be determined based on case data in the association. The prediction system 150 is arranged to utilise a model for predicting risk which is adaptive and suitable for machine learning to be used. A listener 140 of the server 100 obtains case data from messages sent on a message bus 130, which may provide the server 100 with more data to be used for training the machine learning system. Case data obtained from the listener 140 may include an outcome for the presence of material of interest in an article for which the prediction system 150 had predicted a risk. The model for predicting risk may then be updated to reflect any differences between the prediction and the outcome for the article. Future risk determinations for articles in transit may then benefit from the updated model.

Fig. 2 shows a security system 190 for a transit facility. The security system 190 comprises a plurality of detection devices; first detection device 11, second detection device 12 and third detection device 13. The system 190 also comprises a data store 20, a transit control system 40, a human user interface 50 and a server 100. The server 100 comprises a plurality of APIs (first API 111, second API 112 and third API 113), a message bus 130, a listener 140, a prediction system 150 and a plurality of software applications running on the server 100 (first software application 121, second software application 122 and third software application 123). The prediction system 150 comprises a machine learning element 151. The third API 113 is illustrated as having its own local data store 114.

The data store 20 stores an association between each of a plurality of case identifiers and a corresponding plurality of items of case data each describing an article in transit. This may be stored on a volatile and/or non-volatile memory of the data store 20. Each of the first detection device 11 and the data store 20 are coupled to the server 100.

Each of the plurality of software applications of the server 100 are coupled to at least one of the plurality of APIs so that they may use the APIs for communication. Each of the plurality of software applications may call one or more of the APIs to provide communication between the software and the rest of the system 190. Each of the APIs is coupled to the message bus 130, as is the listener 140, the first detection device 11, the data store 20 and the prediction system 150. The message bus 130 is configured to provide a communication path between each of these components of the system 190. The transit control system 40 is coupled to the server 100, for example, it may be coupled to the message bus 130. The human user interface 50 is also coupled to the server 100. It is illustrated as being coupled to a software application. However, it is to be appreciated that both the human user interface 50 and the transit control system 40 may be coupled to any of: the message bus 130, an API and/or a software application.

The third API 113 is coupled to its local data store 114 so that any communication between another feature of the system 190 and said local data store 114 requires the use of the third API 113. The third API 113 may not be required to use the message bus 130 to communicate with its local data store 114. The first detection device 11 is illustrated as being coupled to the message bus 130. The second detection device 12 is illustrated as being coupled to the first API 111 and the third detection device 13 is illustrated as being coupled to the first software application 121. It is to be appreciated that this arrangement is not limiting, and that it just represents the notion that communication between a detection device and the server 100 may take several forms. For example, the server 100 may comprise a specific detection device input API or detection device input software application which is configured to receive and process detection data from the detection device.

In operation, the system 190 of Fig. 2 works in a similar manner to the system 90 of Fig. 1 as described above. Thus, the listener 140 is configured to obtain, from the message bus 130, messages sent between the APIs carrying a case identifier, and to modify the stored association based on the case identifier and case data carried by said messages.

In addition, the system 190 of Fig. 2 is configured to use the prediction system 150 to assist in identifying the presence of material of interest in articles in transit through the transit facility. The prediction system 150 is configured to determine a risk indicator for an article in transit. This determination may be based on the stored association. It is to be appreciated in the context of this disclosure that the prediction system 150 may determine the risk indicator in a variety of different ways. For example, the risk indicator may be determined based on a mathematical model which works using data associated with the article as its input.

The risk indicator may comprise a value which indicates a level of risk associated with an article. For example, the risk indicator may represent percentage likelihood for the presence of material of interest in an article in transit through the transit facility. The risk indicator may represent a risk associated with not triggering a security action for the article. The risk indicator may be in the form of a continuous variable, such as a determined percentage chance for the likelihood of there being material of interest present in the article. The risk indicator may be in the form of a discrete variable, such as a Boolean-type 'trigger security action' or `Do not trigger security action'. The risk indicator may comprise both such examples, so that it comprises a percentage risk and an indication of whether or not the security action should be triggered. For example, the prediction system 150 may comprise a threshold risk value above which it is determined that a security action should be triggered, and below which, a security action should not be triggered.

The risk indicator for an article is determined by providing the prediction system 150 with input data, such as case data from the association. For instance, case data associated with the case identifier corresponding to the article may be used. The prediction system 150 is configured to compute a risk indicator for the article based on this input data. Therefore, the determined risk indicator may be sensitive to the input data that is provided to the prediction system 150. Providing the prediction system 150 with more input data and/or more relevant/accurate input data may help to smooth out some issues associated with this dependence on input data. For example, it may be difficult to predict the risk for the presence of material of interest in an article when the only input data is the day of the week the container arrived at the transit facility.

The risk indicator for a first article associated with a first case identifier may be determined by providing, as input data to the prediction system 150, stored items of case data associated with the first case identifier. For example, this may comprise so-called `manifest data', which encompasses all stored data associated with the first article, such as travel logs and a history of indications of the presence of material of interest in articles associated with the first case identifier. The risk indicator for the first article may also be determined using additional data from the association as input data. Case data associated with other articles (or case identifiers) may be used. This may enable the prediction system 150 to determine a risk indicator in a manner which is adaptive to recent data relating to other articles, which may enable the prediction system 150 to spot any general trends. For example, the input data may comprise data representative of all case data associated with the article owner (such as number of previous occurrences of material of interest being present), or which arrived at the transit facility at the same time.

The prediction system 150 also comprises a machine learning element 151, which can update the prediction system 150. The machine learning element 151 is configured to enable supervised learning, in which input data is provided to the prediction system 150, as well as an expected outcome. The prediction system 150 determines a predicted value based on the input data. The machine learning element 151 is configured to perform a comparison between the predicted value and the expected outcome. In the event that the predicted value and the expected outcome differ, the machine learning element 151 updates the prediction system 150 based on the predicted value and the expected outcome. The prediction system 150 is updated in light of the difference between the predicted value and the expected outcome. The machine learning element 151 is configured to update the prediction system 150 so that in the event that the prediction system 150 were to determine a second predicted value based on the same input data, the difference between the predicted value and the expected outcome is reduced. Accordingly, in such an event, the manner in which the prediction system 150 determines the risk indicator will change. This change will depend on the type of computation performed by the prediction system 150. The extent of the change will also depend on the size of the difference between the predicted value and the expected outcome.

It is to be appreciated in the context of this disclosure that many different types of prediction system 150 could be used. Typically, the prediction system 150 will determine a risk indicator using a model (e.g. numerical or logical) which processes the input data to compute a value for the risk indicator. The model is configured in such a way that it may be updated by the machine learning element 151. Such updates to the model may occur in several ways, but in general they will reflect the outcome of the supervised learning. For instance, this may enable the model to be 'fine-tuned' based on training data it is presented with. For example, the prediction system 150 may determine a risk indicator using at least one of: (i) a regression analysis; (ii) a decision tree algorithm; and (iii) an artificial neural network (`ANN'). These approaches may be performed by a processor of the server 100.

The manner in which each of these implementations operate may be changed in response to case data obtained from said messages. In particular, where the obtained case data provides an indication of an outcome for the presence of material of interest in an article in transit, the machine learning element 151 may use this indication to train the model used by the prediction system 150. This training may be in the form of supervised learning. This is because a predicted value and an expected outcome may be compared. This enables the machine learning element 151 to determine an accuracy value for the present prediction system 150. The prediction system 150 may then be updated based on the prediction and the outcome. Therefore, the listener 140 providing the prediction system 150 with more data may aid in the training process of the prediction system 150, as machine learning systems increase in quality with increased training data.

Examples of such updates which change the manner in which the prediction system 150 determines the risk indicator are discussed below in relation to the type of system 150 used to determine the risk indicator.

### Regression analysis

The prediction system 150 may be configured to determine risk indicators using a type of model which is suitable for the machine learning element 151 to train using a regression analysis. A suitable model may comprise a mathematical function which maps input data to predicted outcomes. This may use a linear or a non-linear system. Regression analysis enables this model to be modified to bring predictions for known input values into closer conformity with known outcomes for said input values. For example, if the model comprised a polynomial, the machine learning element 151 may be configured to perform a regression analysis on the model, an outcome of which may be to select coefficients for the polynomial to fit the training data. Fitting the training data may be, e.g. as a `best fit' or minimum error or maximum likelihood, or any other suitable measure of fit. A least squares fit method may be used, which minimises the sum of squares of difference between values predicted by the system 150 and known outcome values. Regression analysis may be used for single variable or multi-variable problems.

A model for use in such regression analysis may involve a plurality of operators, and for each operator there may be a weighting applied. An operator may comprise a function or algorithm for processing input data to produce an output value or command. For instance, a function may comprise a mathematical manipulation of the input data, such as an exponent. An algorithm may be based on a series of logical conditions and in the event that a logical condition for the input value is satisfied, a first output is computed, and in the event that the logical condition is not satisfied a second output is computed. The model may comprise a plurality of these operators which are each configured to produce an output value, and the output of each operator may be scaled by at least one coefficient (weighting). The weightings are configured to control the contribution of each operation to the total risk indicator determined by the prediction system 150.

Changing the manner in which such a function determines the risk indicator may comprise changing at least one of: (i) the operators and (ii) the weightings. Changing the operators may comprise adding new operators, or removing existing operators. This may also be achieved by applying a zero weighting to an operator. In one embodiment, changing the weightings may be preferred over changing the operators. Then, in the event that the model does not appear to be converging towards producing suitable predictions (e.g. a threshold success criteria is not satisfied) the prediction system 150 may trigger an alert for an operator of the server 100 to determine a different set of operators for the prediction system 150.

Regression analysis may be used for models which are configured to predict either and/or both outcomes which have a continuous value (e.g. predicting a percentage), and outcomes which have a discrete value (e.g. yes/no). For discrete value outcomes, a logistic regression may be used, wherein, for example, a model is used which switches rapidly from predicting lower values to higher values, which may be interpreted as switching from yes to no for Boolean type variables.

### Decision tree algorithms

The prediction system 150 may be configured to determine the risk indicator using a decision tree algorithm in which input data is compared with a series of subsequent different logical expressions/decisions/conditions. The logical conditions the input data is compared with will depend on the outcome of a previous logical condition the input data was compared with. By comparing the input data with one sequence (out of a plurality of possible sequences) of logical expressions, the decision tree algorithm generates an attribute for the input data based on the result of such logical testing. An attribute may be a continuous variable or a discrete value.

The prediction system 150 may use a model comprising a decision tree algorithm in which the input data (e.g. case data for a case identifier corresponding to an article in transit through the transit facility) is compared with a first logical condition. There may be a plurality of outcomes for this comparison. For example, where the input data is a numerical value, the comparison may place the value into one of a series of numerical intervals (`data bins'). Alternatively, the comparison may classify the input data into one of two categories; one for input data satisfying a criterion and the other for input data which does not satisfy the criterion. The prediction system 150 will then compare the input data with a second logical condition. There will be a plurality of possible second logical conditions against which the input data may be compared. Which second logical condition is selected will depend on the outcome of the comparison with the first logical condition.

The decision tree algorithm will continue comparing the input data against a subsequent logical condition and using the comparison to select a subsequent logical condition for the input data to be compared with. This process continues until the algorithm finishes, at which point an output for the risk indicator is generated. In one embodiment, a decision tree algorithm is used to classify input data into certain discrete classifications. For example, to associate with an article in transit through the transit facility a classifier of either "trigger security action" or "do not trigger security action".

The decision tree type algorithm may adopt a tree-like structure having a plurality of branches, each extending from a branching point. At each branching point is a decision function, which compares the input data to a threshold criterion. Based on this comparison, the algorithm determines which of the extending branches to follow. By proceeding to completion (leaves at the end of the branches), the algorithm may determine an attribute for the data based on previous experiences with data which satisfied similar (or even the same) criteria.

For example, the algorithm may determine that a first percentage of all instances of input data satisfying a first set of criteria resulted in identifying material of interest in an article. The decision tree algorithm may enable the prediction system 150 to infer that another item of input data satisfying the first set of criteria has a first percentage chance of material of interest being present in it. Such algorithms may enable the identification of `key decisions'. These are decisions which provide the greatest indication of material of interest being present, i.e. all previous input data satisfying the relevant criterion has material of interest present (or does not have material of interest present). These key decisions may be implemented towards the top of the algorithm to provide efficient branching for the algorithm.

Changing the manner in which such an algorithm determines a risk indicator for an article may comprise updating outcome values for the decision tree algorithm. The outcome values represent attributes which may be inferred to the input data based on results from the sequence of decisions. The outcome values may be classifiers, such as whether or not to trigger a security alert. They may be numerical values, such as a percentage chance of material of interest being present in an article based on the sequence of decisions relating to that article. These outcome values may be modified. For example, as the number of articles which follow the same sequence of decisions (with the same comparisons) increases, the outcome value for that sequence of decisions may be changed to reflect that overall group of articles. For example, a numerical average may be used as the outcome value. In one example, the percentage chance of material of interest being present may be lowered for a certain sequence of decisions in the event that new input data satisfied relevant criteria for the sequence of decisions with no material of interest being present in the corresponding article.

Changing the manner may comprise re-ordering the decisions in the algorithm. As described above, there may be key decisions which are identified and re-located to an earlier stage in the algorithm. Changing the manner may comprise introducing a new decision into the algorithm with new branches stemming therefrom. For example, where a trend is observed in new items of data which suggests that one logical condition correlates to an outcome, this logical condition may be included in the algorithm.

Such a decision tree algorithm may therefore be used to classify input data into certain categories, or assign numeric values to the input data, based on experience with previous data. The decision tree algorithm may be in the form of a 'random forest' algorithm where there is a plurality of different decision trees, each trained on a random sample of input data. The random forest algorithm determines the output values based on an average outcome using a predicted outcome from each of the individual component decision tree algorithms. Gradient boosting may also be used in which a first decision tree algorithm is trained and tested. Any incorrectly determined output values from the first decision tree are identified and then used to train a second decision tree algorithm. This process may be repeated for a plurality of subsequent decision tree algorithms.

### Artificial Neural Networks (ANNs)

The prediction system 150 may be configured to determine a risk indicator using an ANN in which at least one layer comprising a plurality of 'neurons' is used. Each neuron may be a type of operator which is configured to receive an item of data and to process this received data to produce a processed item of data. The received data may be, for example, a portion of detection data, such as a pixel region of an image. For multi-layered ANNs, the received data will be processed data from the preceding layer of neurons. Each neuron comprises at least one operator which performs a certain function on its received data. This function may comprise applying a weighting to different sources of received data (so as to control the contribution to the processed data from a plurality of sources). The function may also comprise manipulating the input data in a certain way (such as based on a mathematical model). The prediction system 150 may be configured to use such an ANN to produce a specific type of output, such as a continuous value (e.g. a probability) or a discrete value (e.g. a yes/no).

Such a prediction system 150 may be trained by providing the ANN with training data in the form of input data and expected outcomes for the input data. For instance, the prediction system 150 may be used to determine a risk indicator for an article in transit. This may be used as input data for training the ANN if there is also a known outcome for the presence of material of interest in the article. The known outcome may be identified by the listener 140 from observing case data carried on a message sent using the message bus 130.

The manner in which the prediction system 150 determines the risk indicator may be based on such training of the ANN. Weightings applied to the received data for each of the neurons may be modified. These weightings may comprise numerical coefficients for different streams of data received at each neuron. Such weightings may be changed so that predicted values for known input data more closely match the known expected outcome. The system 150 may 'back-propagate' the ANN to identify one or a plurality of neurons which gave rise to the biggest shift in outcome away from the known expected outcome. The weightings for such neurons may be changed.

The system 150 may also modify (or add/remove) the functionality of individual neurons. For example, where the system is back propagated, neurons which consistently distort the answer may be identified and removed/changed. Changing the manner in which the prediction system 150 determines the risk indicator may therefore comprise both changing weightings applied to the input data and also changing the functionality of the neurons themselves.

The prediction system 150 is configured to determine the risk indicator for an article based on input data. In the event that the listener 140 obtains, from the message bus 130, a message confirming the presence or absence (outcome) of material of interest in a first article, the combination of the determined risk indicator for the first article and the obtained outcome may be used as training data for the prediction system 150. The machine learning element 151 may process this data in accordance with a supervised machine learning process for the prediction system 150. By providing the machine learning element 151 with more training data, the accuracy and reliability of the prediction system 150 may be improved. In the event that the prediction system 150 is used to determine a risk indicator for a second article in transit, the updated (trained) prediction system 150 is used, as the prediction system 150 has been trained on the data for the first article. The association also will have updated to include an indication of the outcome for the presence of material of interest in the article. The prediction system 150 may therefore determine, for the second article, a risk indicator based on an updated association and/or an updated prediction system 150.

The prediction system 150 may be configured to determine the risk indicator for an article, and based on the determined risk indicator, to determine whether or not to trigger a security action for the article. The system 190 of Fig. 2 includes a transit control system 40 coupled to the server 100. In the event that a security action for the article is triggered, this may be communicated to the transit control system 40. It may be communicated to the human user interface 50, which may instruct a user to take an action or to decide which action to take (and/or whether or not to take an action). This may be linked with the transit control system 40. For instance, the user may control the transit control system 40, e.g. via sending a message from the human user interface 50 using the message bus 130 to the transit control system 40. The transit control system 40 is configured to control the article in transit accordingly. For instance, to follow protocols specific to that transit facility.

The transit control system 40 may comprise an alert that further case data should be acquired for the article. For instance, this case data may be acquired from the first detection device 11; it may be acquired from a second detection device 12. The transit control system 40 may control transit of the article through the facility based on the risk indicator. This may comprise controlling a flow of articles so that the article in question is directed towards a detection device. Where the articles are carried on a vehicle, this may comprise instructing the vehicle to pass into a detection area. For instance, this may use a lighting system, which instructs a driver of the vehicle in which direction to drive. That way, they may proceed to the detection device if it is determined that further case data should be obtained for the article.

It is to be appreciated in the context of this disclosure that the listener 140 may be in a number of different forms. It may be in the form of an API which is configured to subscribe to messages sent on the message bus 130. Such messages may then be published by the API. The communication may work using network messages. A network message may be any suitable form of message for sending commands or requests across the network. These may be, for example, HTTP request messages. The network message may carry with it at least one of a plurality of identifiers, such as a type identifier or a case identifier. The type identifier for example may specify the source of the message or any details associated with the message. The listener 140 may be configured to only subscribe to messages of a certain type. It may subscribe to all messages of that type. It is to be appreciated that the message bus 130 may comprise a suitable system to enable communication between different software, such as communication between different APIs. For example, the message bus 130 may be provided by a message broker, such as the open source message broker RabbitMQ.

It is to be appreciated in the context of this disclosure any of a plurality of types of suitable detection device may be used. For example, the detection device may comprise a type of scanner, such as an X-ray scanner or a gamma ray scanner. Use of such scanners enables an image to be generated for the contents of an article. Scanners of this nature may provide further indications of the presence or absence of material of interest in an article. The detection device may communicate data from the detection device (e.g. image data, an analysis of the image data or image data including metadata comprising an analysis of the image data) to the server 100. The server 100 may then determine whether or not to trigger a further security alert, such as to physically open the container to inspect for material of interest. The detection device may comprise any device configured to generate and/or receive further data for an article. For example, the detection device may comprise a system for obtaining manifest data relating to articles in transit.

In some embodiments, the detection device may comprise an imaging system for obtaining image data of the article. The imaging system may comprise an Optical Character Recognition (OCR) system. The OCR system may be configured to identify text on the article, such as an article number. This may be compared with case identifiers in the association. In the event that the text on the container corresponds to a case identifier in the association, the server 100 may determine that the image data of the article is associated with said case identifier. The association may then be updated based on the image data. The image data being added to the association associated with the case identifier.

An example of the security system 190 of Fig. 2 in use at a transit facility will now be described.

A first article, such as container from a cargo ship, is received at a transit facility, such as a port or border customs facility. The data store 20 includes an association having case data relating to the first article, or a case identifier associated with the first article. This case data includes a transit history for the first article, as well as details of the present transit of the article, such as its port of origin and owner. The prediction system 150 retrieves this data from the data store 20, by communicating using the message bus 130. The prediction system 150 then determines using a model and this case data a risk indicator for the first article. In this example, the risk indicator indicates that a security action should be triggered as it indicates that there is a high chance of material of interest being present in the article.

The security action is triggered and the first article proceeds to the first detection device 11, which in this example is an X-ray scanner. The article is scanned by the X-ray scanner, and analysis software determines that, based on the scan data, there is no material of interest in the article. Optionally, this analysis software may be inbuilt within the X-ray scanner, or it may be central to the security system. The scanner communicates this to a security system supervisor who communicates with the system using the human user interface 50. The scan data and analysis is communicated to the human user interface 50 by sending a message on the message bus 130. The supervisor is able to observe this result and perform suitable actions to enable the article to proceed.

The listener 140 obtains the contents of the message sent between the scanner and the user interface 50 on the message bus 130. The listener 140 determines, based on this message, that there was no presence of material of interest in the article in question. The listener 140 then updates the association to reflect this. The machine learning element 151 of the prediction system 150 then updates the model for the prediction system 150 to address the model producing a false positive prediction.

The server 100 may receive data for a second article. If the article relates to a case data in the data store 20, the prediction system 150 will retrieve case data associated with the article. If it does not, the server 100 will add a new entry to the association for the second article and the received data for it. The prediction system 150 then determines a risk indicator for the second article. In the event that the second article has similar case data to the first article, the update to the prediction system 150 may be such that the risk indicator for the second article does not trigger a security alert action and the second article is not scanned.

Such operation of the security system 190 may provide benefits as it is configured to obtain feedback regarding the accuracy of its predictions. The system 190 is configured to adapt its prediction system 150 based on this feedback. This may enable changes in patterns of material of interest in transport to be identified and accounted for. This may provide a more effective security system 190 for determining which containers to scan. In an ideal scenario, such a prediction system 150 could be trained to a sufficiently high level of accuracy so that it could determine, based only on stored attributes associated with containers, which containers to scan so that only containers containing material of interest are scanned.

It is to be appreciated in the context of this disclosure that communication between any of the components of the security system and the server 100/message bus 130 may occur in a number of ways. These different ways of communication will be secure. The communication interface of the devices described herein may comprise any wired or wireless communication interface such as WI-FI (RTM), Ethernet, or direct broadband internet connection, and/or a GSM, HSDPA, 3GPP, 4G or EDGE communication interface. It is also to be appreciated that whilst the server 100 is illustrated in Figs. 1 and 2 as comprising the data store 20, the data store 20 may also be separate to the server 100.

Messages described herein may comprise a data payload and an identifier (such as a uniform resource indicator, URI) that identifies the resource upon which to apply the request. This may enable the message to be forwarded across the network to the device to which it is addressed. Some messages include a method token which indicates a method to be performed on the resource identified by the request. For example these methods may include the hypertext transfer protocol, HTTP, methods "GET", "POST" or "HEAD". The requests for content may be provided in the form of hypertext transfer protocol, HTTP, requests, for example such as those specified in the Network Working Group Request for Comments: RFC 2616. As will be appreciated in the context of the present disclosure, whilst the HTTP protocol and its methods have been used to explain some features of the disclosure other internet protocols, and modifications of the standard HTTP protocol may also be used.

As described herein, network messages may include, for example, HTTP messages, HTTPS messages, Internet Message Access Protocol messages, Transmission Control Protocol messages, Internet Protocol messages, TCP/IP messages, File Transfer Protocol messages or any other suitable message type may be used.

Any processors used in the server 100 (and any of the activities and apparatus outlined herein) may be implemented with fixed logic such as assemblies of logic gates or programmable logic such as software and/or computer program instructions executed by a processor. Other kinds of programmable logic include programmable processors, programmable digital logic (e.g., a field programmable gate array (FPGA), an erasable programmable read only memory (EPROM), an electrically erasable programmable read only memory (EEPROM)), an application specific integrated circuit, ASIC, or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof. Such data storage media may also provide the data store 20 of the server 100 (and any of the apparatus outlined herein).

It will be appreciated from the discussion above that the embodiments shown in the Figures are merely exemplary, and include features which may be generalised, removed or replaced as described herein and as set out in the claims. With reference to the drawings in general, it will be appreciated that schematic functional block diagrams are used to indicate functionality of systems and apparatus described herein. For example the functionality provided by the data store 20 may in whole or in part be provided by a processor having one more data values stored on-chip. In addition the processing functionality may also be provided by devices which are supported by an electronic device. It will be appreciated however that the functionality need not be divided in this way, and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

In some examples, one or more memory elements can store data and/or program instructions used to implement the operations described herein. Embodiments of the disclosure provide tangible, non-transitory storage media comprising program instructions operable to program a processor to perform any one or more of the methods described and/or claimed herein and/or to provide data processing apparatus as described and/or claimed herein.

Certain features of the methods described herein may be implemented in hardware, and one or more functions of the apparatus may be implemented in method steps. It will also be appreciated in the context of the present disclosure that the methods described herein need not be performed in the order in which they are described, nor necessarily in the order in which they are depicted in the drawings. Accordingly, aspects of the disclosure which are described with reference to products or apparatus are also intended to be implemented as methods and vice versa. The methods described herein may be implemented in computer programs, or in hardware or in any combination thereof.

Computer programs include software, middleware, firmware, and any combination thereof. Such programs may be provided as signals or network messages and may be recorded on computer readable media such as tangible computer readable media which may store the computer programs in not-transitory form. Hardware includes computers, handheld devices, programmable processors, general purpose processors, application specific integrated circuits, ASICs, field programmable gate arrays, FPGAs, and arrays of logic gates.

Other examples and variations of the disclosure will be apparent to the skilled addressee in the context of the present disclosure.

## Claims

1. A security system (190) to assist in identifying material of interest in articles in transit through a transit facility, the system comprising:
a first detection device (11, 12, 13) for obtaining detection data relating to an article in transit through the transit facility;
a data store (20) configured to store an association between each of a plurality of case identifiers and a corresponding plurality of items of case data each describing an article in transit; and
a server (100) comprising:
a plurality of application programming interfaces, APIs (111, 112, 113), configured to communicate between software applications (121, 122, 123) of the server (100), the first detection device (11, 12, 13), and the data store (20);
a message bus (130) configured to provide a communication path between the plurality of APIs (111, 112, 113);
a listener (140) coupled to the message bus (130) and configured to obtain, from the message bus (130), messages sent between the APIs (111, 112, 113) carrying a case identifier, and to modify the stored association based on the case identifier and case data carried by said messages; and
a prediction system (150) configured to determine, based on data stored in the association, a risk indicator for an article in transit, wherein determining the risk indicator for an article in transit comprises determining a likelihood of material of interest being present in the article;
wherein the system (190) is configured to output an alert to control inspection of an article in transit through the transit facility based on a determined risk indicator for that article.

2. The system (190) of claim 1, wherein the server (100) is configured so that, in the event that the case data carried by said message confirms the presence or absence of material of interest in a first article, the case data in the stored association is updated based on said message.

3. The system (190) of claim 2, wherein the prediction system (150) is configured to determine a risk indicator for a second article based on the updated association.

4. The system (190) of any preceding claim, wherein the prediction system (150) is configured to change the manner in which it determines the risk indicator in response to case data obtained from said messages.

5. The system (190) of any preceding claim, wherein the server (100) is configured to determine whether to trigger a security action for an article based on said risk indicator.

6. The system (190) of claim 5, wherein the security action comprises at least one of: operating the first detection device (11, 12, 13) to obtain further case data describing the article; operating a second detection device (11, 12, 13) to obtain further case data describing the article; and controlling transit of the article through the facility based on the risk indicator.

7. The system (190) of any of the preceding claims, wherein the server (100) is configured to accumulate, in the case data associated with each case identifier, a plurality of items of data describing each article in transit and to determine a risk indicator for each article based on the accumulated case data.

8. The system (190) of any preceding claim, wherein operation of the listener (140) is transparent to the APIs (111, 112, 113).

9. The system (190) of any preceding claim, wherein data obtained from the first detection device (11, 12, 13) comprises image data from a scan of the article, and optionally metadata for the image data.

10. The system (190) of any of the preceding claims, wherein a first of the software applications (121, 122, 123) is configured to provide a human user interface associated with the transit of articles through the facility, and the APIs (111, 112, 113) are configured to communicate between the first software application (121, 122, 123) and the data store (20) using the message bus (130).

11. The system (190) of claim 10, comprising a second software application (121, 122, 123) configured to provide security data from a second detection device (11, 12, 13) to the data store (20) using the APIs (111, 112, 113).

12. The system (190) of any of the preceding claims, wherein the listener (140) comprises at least one API coupled to the message bus (130) and configured to subscribe to all messages comprising a case identifier.

13. A method for identifying material of interest in articles in transit through a transit facility, wherein the transit facility comprises:
a first detection device (11, 12, 13) for obtaining detection data relating to an article in transit through the transit facility;
a data store (20) configured to store an association between each of a plurality of case identifiers and a corresponding plurality of items of case data each describing an article in transit; and
a server (100) comprising:
a plurality of application programming interfaces, APIs, (111, 112, 113) configured to communicate between software applications (121, 122, 123) of the server (100), the first detection device (11, 12, 13), and the data store (20);
a message bus (130) configured to provide a communication path between the plurality of APIs (111, 112, 113); and
a listener (140) coupled to the message bus (130);
wherein the method comprises:
operating the listener (140) to obtain, from the message bus (130), messages sent between the APIs (111, 112, 113) carrying a case identifier;
modifying the stored association based on the case identifier and case data carried by said messages;
determining, based on data stored in the association, a risk indicator for an article in transit, wherein determining the risk indicator for an article in transit comprises determining a likelihood of material of interest being present in the article; and
outputting an alert to control inspection of an article in transit through the transit facility based on a determined risk indicator for that article.

14. The method of claim 13, wherein the method comprises changing the manner in which the risk indicator is determined in response to, and based on, case data obtained from said messages.

15. A computer program product comprising program instructions configured to program a processor to perform the method of any of claims 13 or 14.

## Patentansprüche

1. Sicherheitssystem (190) zur Unterstützung beim Identifizieren von Material von Interesse in Artikeln in Transit durch eine Transiteinrichtung, wobei das System Folgendes umfasst:
eine erste Erkennungsvorrichtung (11, 12, 13) zum Erhalten von Erkennungsdaten in Bezug auf einen Artikel auf dem Weg durch die Transiteinrichtung;
einen Datenspeicher (20), konfiguriert zum Speichern einer Assoziation zwischen jeder von mehreren Fallkennungen und einer entsprechenden Mehrzahl von Falldatenelementen, die jeweils einen Artikel in Transit beschreiben; und
einen Server (100), der Folgendes umfasst:
mehrere Anwendungsprogrammierschnittstellen, APIs (111, 112, 113), konfiguriert zum Kommunizieren zwischen Software-Anwendungen (121, 122, 123) des Servers (100), der ersten Erkennungsvorrichtung (11, 12, 13) und dem Datenspeicher (20);
einen Nachrichtenbus (130), konfiguriert zum Bereitstellen eines Kommunikationspfads zwischen den mehreren APIs (111, 112, 113);
einen Zuhörer (140), der mit dem Nachrichtenbus (130) gekoppelt und konfiguriert ist zum Erhalten, von dem Nachrichtenbus (130), von Nachrichten, die zwischen den APIs (111, 112, 113) gesendet werden und eine Fallkennung führen, und zum Modifizieren der gespeicherten Assoziation auf der Basis der Fallkennung und der von den genannten Nachrichten geführten Falldaten; und
ein Vorhersagesystem (150), konfiguriert zum Bestimmen, auf der Basis von in der Assoziation gespeicherten Daten, eines Risikoindikators für einen Artikel in Transit, wobei das Bestimmen des Risikoindikators für einen Artikel in Transit das Bestimmen einer Wahrscheinlichkeit umfasst, dass Material von Interesse in dem Artikel vorhanden ist;
wobei das System (190) zum Ausgeben einer Warnung konfiguriert ist, um die Inspektion eines Artikels in Transit durch die Transiteinrichtung auf der Basis eines bestimmten Risikoindikators für diesen Artikel zu steuern.

2. System (190) nach Anspruch 1, wobei der Server (100) so konfiguriert ist, dass, falls die von der genannten Nachricht geführten Falldaten die An- oder Abwesenheit von Material von Interesse in einem ersten Artikel bestätigen, die Falldaten in der gespeicherten Assoziation auf der Basis der genannten Nachricht aktualisiert werden.

3. System (190) nach Anspruch 2, wobei das Vorhersagesystem (150) zum Bestimmen eines Risikoindikators für einen zweiten Artikel auf der Basis der aktualisierten Assoziation konfiguriert ist.

4. System (190) nach einem vorherigen Anspruch, wobei das Vorhersagesystem (150) zum Ändern der Art und Weise, in der es den Risikoindikator bestimmt, als Reaktion auf aus den genannten Nachrichten erhaltenen Falldaten konfiguriert ist.

5. System (190) nach einem vorherigen Anspruch, wobei der Server (100) zum Feststellen auf der Basis des genannten Risikoindikators konfiguriert ist, ob eine Sicherheitsaktion für einen Artikel ausgelöst werden soll.

6. System (190) nach Anspruch 5, wobei die Sicherheitsmaßnahme mindestens eines beinhaltet von:
Betreiben der ersten Erkennungsvorrichtung (11, 12, 13), um weitere den Artikel beschreibende Falldaten zu erhalten;
Betreiben einer zweiten Erkennungsvorrichtung (11, 12, 13), um weitere den Artikel beschreibende Falldaten zu erhalten;
und Steuern des Transits des Artikels durch die Einrichtung auf der Basis des Risikoindikators.

7. System (190) nach einem der vorherigen Ansprüche, wobei der Server (100) zum Akkumulieren, in den mit jeder Fallkennung assoziierten Falldaten, mehrerer jeden Artikel in Transit beschreibender Datenelemente und zum Bestimmen eines Risikoindikators für jeden Artikel auf der Basis der akkumulierten Falldaten konfiguriert ist.

8. System (190) nach einem vorherigen Anspruch, wobei der Betrieb des Zuhörers (140) für die APIs (111, 112, 113) transparent ist.

9. System (190) nach einem vorherigen Anspruch, wobei von der ersten Erkennungsvorrichtung (11, 12, 13) erhaltene Daten Bilddaten von einem Scan des Artikels und optional Metadaten für die Bilddaten umfassen.

10. System (190) nach einem der vorherigen Ansprüche, wobei eine erste der Software-Anwendungen (121, 122, 123) zum Bereitstellen einer mit dem Transit von Artikeln durch die Einrichtung assoziierten menschlichen Benutzeroberfläche konfiguriert ist, und die APIs (111, 112, 113) zum Kommunizieren zwischen der ersten Software-Anwendung (121, 122, 123) und dem Datenspeicher (20) mittels des Nachrichtenbusses (130) konfiguriert sind.

11. System (190) nach Anspruch 10, das eine zweite Software-Anwendung (121, 122, 123) umfasst, die zum Liefern von Sicherheitsdaten über die APIs (111, 112, 113) von einer zweiten Erkennungsvorrichtung (11, 12, 13) an den Datenspeicher (20) konfiguriert ist.

12. System (190) nach einem der vorherigen Ansprüche, wobei der Zuhörer (140) mindestens eine API umfasst, die mit dem Nachrichtenbus (130) gekoppelt und zum Abonnieren aller eine Fallkennung umfassenden Nachrichten konfiguriert ist.

13. Verfahren zum Identifizieren von Material von Interesse in Artikeln in Transit durch eine Transiteinrichtung, wobei die Transiteinrichtung Folgendes umfasst:
eine erste Erkennungsvorrichtung (11, 12, 13) zum Erhalten von Erkennungsdaten in Bezug auf einen Artikel in Transit durch die Transiteinrichtung;
einen Datenspeicher (20), konfiguriert zum Speichern einer Assoziation zwischen jeder von mehreren Fallkennungen und einer entsprechenden Mehrzahl von Falldatenelementen, die jeweils einen Artikel in Transit beschreiben; und
einen Server (100), der Folgendes umfasst:
mehrere Anwendungsprogrammierschnittstellen, APIs (111, 112, 113), konfiguriert zum Kommunizieren zwischen Software-Anwendungen (121, 122, 123) des Servers (100), der ersten Erkennungsvorrichtung (11, 12, 13) und dem Datenspeicher (20);
einen Nachrichtenbus (130), konfiguriert zum Bereitstellen eines Kommunikationspfads zwischen den mehreren APIs (111, 112, 113); und
einen Zuhörer (140), der mit dem Nachrichtenbus (130) gekoppelt ist;
wobei das Verfahren Folgendes beinhaltet:
Betreiben des Zuhörers (140) zum Erhalten, vom Nachrichtenbus (130), von eine Fallkennung führenden Nachrichten, die zwischen den APIs (111, 112, 113) gesendet werden;
Modifizieren der gespeicherten Assoziation auf der Basis der Fallkennung und der von den genannten Nachrichten geführten Falldaten;
Bestimmen, auf der Basis von in der Assoziation gespeicherten Daten, eines Risikoindikators für einen Artikel in Transit, wobei das Bestimmen des Risikoindikators für einen Artikel in Transit das Bestimmen einer Wahrscheinlichkeit beinhaltet, dass Material von Interesse in dem Artikel vorhanden ist; und
Ausgeben einer Warnung zum Steuern der Inspektion eines Artikels in Transit durch die Transiteinrichtung auf der Basis eines bestimmten Risikoindikators für diesen Artikel.

14. Verfahren nach Anspruch 13, wobei das Verfahren das Ändern der Art und Weise beinhaltet, in der der Risikoindikator als Reaktion auf und auf der Basis von von den genannten Nachrichten erhaltenen Falldaten bestimmt wird.

15. Computerprogrammprodukt mit Programmbefehlen, konfiguriert zum Programmieren eines Prozessors zum Durchführen des Verfahrens nach Anspruch 13 oder 14.

## Revendications

1. Système de sécurité (190) pour aider à identifier un matériau d'intérêt dans des articles en transit à travers une installation de transit, le système comprenant :
un premier dispositif de détection (11, 12, 13) destiné à obtenir des données de détection concernant un article en transit à travers l'installation de transit ;
un dispositif de stockage de données (20) configuré pour stocker une association entre chacun d'une pluralité d'identifiants de cas et d'une pluralité correspondante d'éléments de données de cas décrivant chacun un article en transit ; et
un serveur (100) comprenant :
une pluralité d'interfaces de programmation d'application, API (111, 112, 113), configurées pour communiquer entre des applications logicielles (121, 122, 123) du serveur (100), le premier dispositif de détection (11, 12, 13), et le dispositif de stockage de données (20) ;
un bus de messages (130) configuré pour fournir une voie de communication entre la pluralité d'API (111, 112, 113) ;
un dispositif d'écoute (140) couplé au bus de messages (130) et configuré pour obtenir, à partir du bus de messages (130), des messages envoyés entre les API (111, 112, 113) portant un identifiant de cas et pour modifier l'association stockée sur la base de l'identifiant de cas et des données de cas portés par lesdits messages ; et
un système de prédiction (150) configuré pour déterminer, sur la base des données stockées dans l'association, un indicateur de risque pour un article en transit, dans lequel la détermination de l'indicateur de risque pour un article en transit comprend la détermination de la probabilité de la présence d'un matériau d'intérêt dans l'article ;
dans lequel le système (190) est configuré pour émettre une alerte en sortie pour commander l'inspection d'un article en transit à travers l'installation de transit sur la base d'un indicateur de risque déterminé pour cet article.

2. Système (190) selon la revendication 1, dans lequel le serveur (100) est configuré de sorte que, dans le cas où les données de cas portées par ledit message confirment la présence ou l'absence d'un matériau d'intérêt dans un premier article, les données de cas dans l'association stockée sont mises à jour sur la base dudit message.

3. Système (190) selon la revendication 2, dans lequel le système de prédiction (150) est configuré pour déterminer un indicateur de risque pour un deuxième article sur la base de l'association mise à jour.

4. Système (190) selon l'une quelconque des revendications précédentes, dans lequel le système de prédiction (150) est configuré pour changer la manière dont il détermine l'indicateur de risque en réponse à des données de cas obtenues à partir desdits messages.

5. Système (190) selon l'une quelconque des revendications précédentes, dans lequel le serveur (100) est configuré pour déterminer s'il faut déclencher une action de sécurité pour un article sur la base dudit indicateur de risque.

6. Système (190) selon la revendication 5, dans lequel l'action de sécurité comprend au moins une action parmi :
la mise en fonctionnement du premier dispositif de détection (11, 12, 13) pour obtenir des données de cas supplémentaires décrivant l'article ; la mise en fonctionnement d'un deuxième dispositif de détection (11, 12, 13) pour obtenir des données de cas supplémentaires décrivant l'article ; et la commande du transit de l'article à travers l'installation sur la base de l'indicateur de risque.

7. Système (190) selon l'une quelconque des revendications précédentes, dans lequel le serveur (100) est configuré pour accumuler, dans les données de cas associées à chaque identifiant de cas, une pluralité d'éléments de données décrivant chaque article en transit et pour déterminer un indicateur de risque pour chaque article sur la base des données de cas accumulées.

8. Système (190) selon l'une quelconque des revendications précédentes, dans lequel le fonctionnement du dispositif d'écoute (140) est transparent pour les API (111, 112, 113).

9. Système (190) selon l'une quelconque des revendications précédentes, dans lequel les données obtenues à partir du premier dispositif de détection (11, 12, 13) comprennent des données d'image à partir d'un balayage de l'article, et facultativement des métadonnées pour les données d'image.

10. Système (190) selon l'une quelconque des revendications précédentes, dans lequel une première des applications logicielles (121, 122, 123) est configurée pour fournir une interface d'utilisateur humain associée au transit d'articles à travers l'installation, et les API (111, 112, 113) sont configurées pour communiquer entre la première application logicielle (121, 122, 123) et le dispositif de stockage de données (20) en utilisant le bus de messages (130) .

11. Système (190) selon la revendication 10, comprenant une deuxième application logicielle (121, 122, 123) configurée pour fournir des données de sécurité à partir d'un deuxième dispositif de détection (11, 12, 13) au dispositif de stockage de données (20) en utilisant les API (111, 112, 113) .

12. Système (190) selon l'une quelconque des revendications précédentes, dans lequel le dispositif d'écoute (140) comprend au moins une API couplée au bus de messages (130) et configurée pour souscrire à tous les messages comprenant un identifiant de cas.

13. Procédé destiné à identifier un matériau d'intérêt dans des articles en transit à travers une installation de transit, dans lequel l'installation de transit comprend :
un premier dispositif de détection (11, 12, 13) destiné à obtenir des données de détection concernant un article en transit à travers l'installation de transit ;
un dispositif de stockage de données (20) configuré pour stocker une association entre chacun d'une pluralité d'identifiants de cas et d'une pluralité correspondante d'éléments de données de cas décrivant chacun un article en transit ; et
un serveur (100) comprenant :
une pluralité d'interfaces de programmation d'application, API (111, 112, 113), configurées pour communiquer entre des applications logicielles (121, 122, 123) du serveur (100), le premier dispositif de détection (11, 12, 13), et le dispositif de stockage de données (20) ;
un bus de messages (130) configuré pour fournir une voie de communication entre la pluralité d'API (111, 112, 113) ;
un dispositif d'écoute (140) couplé au bus de messages (130) ;
dans lequel le procédé comprenant :
la mise en fonctionnement du dispositif d'écoute (140) pour obtenir, à partir du bus de messages (130), des messages envoyés entre les API (111, 112, 113) portant un identifiant de cas ;
la modification de l'association stockée sur la base de l'identifiant de cas et des données de cas portés par lesdits messages ;
la détermination, sur la base des données stockées dans l'association, d'un indicateur de risque pour un article en transit, dans lequel la détermination de l'indicateur de risque pour un article en transit comprend la détermination d'une probabilité de la présence d'un matériau d'intérêt dans l'article ; et
l'émission d'une alerte en sortie pour commander l'inspection d'un article en transit à travers l'installation de transit sur la base d'un indicateur de risque déterminé pour cet article.

14. Procédé selon la revendication 13, dans lequel le procédé comprend le changement de la manière dont l'indicateur de risque est déterminé en réponse aux et sur la base de données de cas obtenues à partir desdits messages.

15. Produit de programme d'ordinateur comprenant des instructions de programme configurées pour programmer un processeur afin qu'il réalise le procédé selon l'une quelconque des revendications 13 ou 14.
